# EUROPÄISCHE PATENTSCHRIFT

(11) **EP 0 653 294 B1**
(45) Veröffentlichungstag und Bekanntmachung des Hinweises auf die Patenterteilung: **12.01.2000**
(21) Anmeldenummer: 94117651.3
(22) Anmeldetag: 09.11.1994
(51) Int. Cl.: B29D 30/42, B29C 65/02, B29C 65/14, B29C 65/62

(54) **Karkasse eines Fahrzeugluftreifens**
Tyre carcass
Carcasse de pneumatique

(30) Priorität: 15.11.1993 DE 4338909
(43) Veröffentlichungstag der Anmeldung: 17.05.1995
(73) Patentinhaber: Uniroyal Englebert Reifen GmbH, D-52068 Aachen (DE)
(72) Erfinder: Spielvogel, Andreas, Dr., D-52146 Würselen (DE); Pöhler, Bernd, D-52080 Aachen (DE)
(74) Vertreter: Schneider, Egon

(56) Entgegenhaltungen:
- FR-A- 923 491
- US-A- 2 688 996
- US-A- 3 904 457
- US-A- 3 909 341
- US-A- 4 054 475
- US-A- 5 221 409
- PATENT ABSTRACTS OF JAPAN vol. 18, no. 192 (M-1587) 4. April 1994 & JP-A-06 000 896 (TOYO TIRE & RUBBER CO.) 11. Januar 1994
- DATABASE WPI Week 8823, Derwent Publications Ltd., London, GB; AN 88-160161 & SU-A-1 351 813 (NON-ORE HYDRO-MECHN) 15. November 1987

## Beschreibung

Die Erfindung betrifft eine Karkasse eines Fahrzeugluftreifens.

Karkassen von Fahrzeugluftreifen sind üblicherweise aus einer oder mehreren Lagen von jeweils parallel zueinander in Kautschuk eingebetteten Festigkeitsträgern aufgebaut. Die einzelnen Karkassenlagen werden dabei aus durchgehenden Kautschukbändern mit parallel in Laufrichtung angeordneten Festigkeitsträgern gefertigt. Hierzu werden die mit darin eingebetteten Festigkeitsträgern versehenen Kautschukbänder je nach gewünschter Schräglage der Festigkeitsträger zur Reifenäquatorebene im späteren Reifenaufbau üblicher Weise in einzelne Stücke schräg oder bei radialem Karkassenaufbau quer geschnitten. Die schnittfreien Seiten der erhaltenen Stücke, die zuvor bereits die Seiten des Kautschukbandes darstellten, werden dann üblicherweise unter Überlappung mehrerer Festigkeitsträger miteinander verbunden. Sobald die für den Umfang des herzustellenden Reifens gewünschte Karkassenlänge erreicht ist, wird die aus den einzelnen schräg- bzw. quergeschnittenen Karkassenstücken gebildete Karkassenlage auf der Wickeltrommel auf die bereits vorbereitete Innenschicht, auf eine bereits aufgelegte Karkassenschicht, oder, falls erforderlich, auf zusätzliche Zwischenschichten aufgelegt. Die Karkassenlage wird dabei um den gesamten Umfang herum gelegt und üblicherweise mit ihren Endbereichen ebenfalls unter Überlappung einzelner Festigkeitsträger miteinander verbunden.

Anschließend werden, je nach gewünschter Ausführung, zusätzliche Karkassenschichten, Zwischenschichten, Gürtellagen und Lauffläche aufgebracht. Während des Herstellungsprozesses ist es üblich, zur Erzeugung der gewünschten Rohlingsform, die mit den Karkassenlagen versehene Trommel in Umfangsrichtung bei der Bombage zu expandieren.

Bereits bei der Bombage, spätestens jedoch nach Vulkanisation und Fertigstellung des Reifens, sobald dieser für den Betriebszustand aufgepumpt wird, machen sich die Verdickungsstellen, die durch die Überlappung mehrerer Festigkeitsträger an einzelnen Stellen im Karkassenaufbau erzeugt wurden, negativ bemerkbar. Das abweichende Festigkeits- und Elastizitätsverhalten der Karkasse in diesen Bereichen führt zu optisch feststellbaren Einschnürungen.

Es sind mehrfach Vorschläge gemacht worden, nach denen die durch die Überlappung entstehenden Einschnürungen gemildert oder optisch überdeckt werden sollen. Beispielsweise wird durch die EP 0 239 160 B1 vorgeschlagen, im Bereich der Überlappung zusätzliche Spleißbänder vorzusehen. In der EP 0 407 134 B1 wird vorgeschlagen, im Überlappungsbereich zusätzliche Gummibänder vorzusehen, durch die die Einschnürung mehr oder weniger zuverlässig überdeckt werden soll. In beiden Fällen wird die vorhandene Einschnürung durch Überdeckung optisch lediglich gemildert. Die Einschnürung an sich bleibt bestehen. Je nach Betriebszustand des Reifens, Verarbeitung, Reifengröße und Aufbau bleibt der Einschnüreffekt erkennbar. Für jeden Reifentyp und -größe kann die Einschnürung lediglich für einen bestimmten, ideal gewünschten Betriebszustand, wenn überhaupt, vollständig überdeckt werden.

Außerdem ist durch die Überlappung und die zusätzlichen Überdeckungsmaterialien ein zusätzlicher Kosten-, Material- und Herstellungsaufwand erforderlich.

Aus dem Bereich der Gürtellagen sowie aus dem mit Stahlfestigkeitsträgern bestückten Monoplyreifen ist es bekannt, die Enden einer Gürtellage auf Stoß miteinander zu verbinden und mit Hilfe von Andrückrollen fest miteinander zu verbinden. Die Verwendung des stabilen Stahls als Festigkeitsträger ermöglicht dabei den Einsatz der Andrückrollen. Die verwendete Preßkraft kann vergleichsweise zuverlässig von den Stahlkorden aufgenommen werden. Mit Hilfe von mögliche Fehler im Verbindungsbereich mit Stahlcord nachweisenden Röntgenverfahren können auftretende Nahtöffnungen bei den stabilen Stahlcorden in der Gürtellage und bei Monoplylagen festgestellt werden. Die Belastung der Stahlgürtellagen ist aufgrund der geringen auf diese ausgeübte Erhebung vergleichsweise gering. Zur Sicherung der Verbindungsstelle sind hier nur geringe Haltekräfte erforderlich. In Monoplylagen bieten die Berührungsstellen aufgrund der dicken Ausbildung der Lage große Berührungsflächen. Die flächenbezogene Haltekraft kann deswegen auch für den Erhebungsvorgang klein bemessen werden. Die Karkassenlagen, insbesondere die Textilkarkassenlagen, sind aus dünnen Festigkeitsträgern aufgebaut. Das Erfordernis einer genaueren Untersuchung der Festigkeitsträger und der Nahtstelle ist hier durch Röntgenverfahren nicht sicherbar. Insbesondere bei textilen Festigkeitsträgern ist ein solches Röntgenverfahren nicht anwendbar.

Die dünnen Karkassenlagen bieten nur kleine Halteflächen im Berührungsbereich, so daß die flächenbezogenen Haltekräfte zum sicheren Verbinden sehr groß werden. Bei einfachem stoßweisen Aneinanderfügen von Lagenenden einer dünnen Karkassenlage besteht eine erhöhte Gefahr des Auseinanderreißens der Fügestelle beim Expandieren durch Bombieren. Auch durch die Verwendung von Klebstoff oder durch Auflegen einer zusätzlichen Schicht im Bereich der Stoßstelle besteht insbesondere bei größeren Expandierungen die erhöhte Gefahr des Fügestellenöffnens. Eine solche zusätzliche überdeckende Schicht, wie sie zum Beispiel aus der DE-OS 25 04 181 bekannt ist, bringt zusätzlich abschnittsweise erhebliche Materialanhäufungen, die auch noch zusätzliche Kosten für Material bedeuten. Weiterhin wirken sie negativ auf Reifeneigenschaften, wie Laufruhe und Haltbarkeit. Fügefehler werden für optische Kontrollen verdeckt und durch die zusätzliche Materialschicht schwerer feststellbar. Das zusätzliche Material wirkt beim Expandieren durch Versteifung der abgedeckten Stellen ebenfalls einschnürend.

Der Erfindung liegt das Problem zugrunde, eine Karkasse eines Fahrzeugluftreifens so zu gestalten, daß mit einfachen, kostengünstigen Mitteln der Reifen optisch und qualitativ verbessert wird.

Das Problem wird erfindungsgemäß durch die Ausgestaltung einer Karkasse eines Fahrzeugluftreifens gemäß den Merkmalen von Anspruch 1 sowie durch das Verfahren nach Anspruch 9 gelöst. Durch die dauerhaft überlappungsfrei miteinander verbundenen Endbereiche einer Lage wird die Gefahr des Aufreißens der Verbindungsstelle beim Bombieren erheblich gesenkt. Ohne Überlappung entfällt Überlappungsmaterial. Eine Überdeckung durch zusätzliches Überdeckungsmaterial kann ebenfalls entfallen. Somit kann auf zusätzliches Material, sowie auf zusätzlichen Aufwand zur Übertünchung der durch die Überlappung und Überdeckung verursachten Folgeerscheinungen verzichtet werden. Einschnürungen treten nicht auf. Die Kosten der Karkasse und somit des Reifens können gesenkt, die Optik verbessert und die Zuverlässigkeit der Karkasse und somit des Reifens gesteigert werden.

Die Ausbildung gemäß den Merkmalen von Anspruch 3 bzw. das Verfahren von Anspruch 10 ermöglichen ohne Anpreßdruck eine dauerhafte überlappungsfreie Verbindung der Endbereiche.

Die Ausbildung gemäß dem Merkmal von Anspruch 4 bzw. von Anspruch 11 ermöglicht eine besonders zuverlässige, auf inneren Kräften basierende Verbindung der Endbereiche.

Eine bevorzugte Ausbildung der Karkasse stellt die Karkasse eines Fahrzeugluftreifens gemäß den Merkmalen von Anspruch 4 dar. Zur Anvulkanisation können übliche, für die Gummiverarbeitung bekannte und bereits im Produktionsbereich vorhandene Einrichtungen verwendet werden.

Besonders vorteilhaft ist die Ausbildung der Karkasse gemäß den Merkmalen von Anspruch 6. Durch Anvulkanisation des Verbindungsbereichs mit der darunter befindlichen Lage ist zum einen die feste Lagenzuordnung beider Lagen gewährleistet. Zum anderen wird durch die Anvulkanisation die für die Dauer bis zur Endvulkanisation erreichte Versteifung sowohl der miteinander verbundenen Lagenenden als auch des unmittelbar darunter befindlichen Lagenbereichs bei der Bombage eine zusätzliche Entlastung der Verbindungsstelle erreicht. Die Gefahr des Reißens der Verbindungsstelle während der Bombage ist hierdurch zusätzlich noch weiter minimiert.

Die Versteifung wird dabei ohne Einsatz zusätzlich zur Überdeckung speziell bereitgestellter Schichten und somit ohne Lauf- und Einschnürprobleme für den fertigen Reifen ermöglicht.

Bevorzugt wird die Anvulkanisation eines Verbindungsbereichs mit der Reifeninnenschicht.

Die Erfindung wird im folgenden anhand der in den Figuren 1 bis 7 näher dargestellten Ausführungsbeispiele näher erläutert.

Hierin zeigen:
- Figur 1:: den schematischen Aufbau eines Reifens in Querschnittsdarstellung,
- Figur 2:: den schematischen Reifenaufbau in perspektivischer Darstellung,
- Figur 3:: schematische Darstellung zur erfindungsgemäßen Erzeugung einer dauerhaften Verbindung zweier Endbereiche einer Karkassenlage durch Anvulkanisation mit Hilfe einer Anvulkanisationspistole an der Reifenwickelmaschine,
- Figur 4:: erfindungsgemäße Darstellung einer dauerhaften Verbindung zweier Lagenenden einer Karkassenlage durch Anvulkanisation am Schneidetisch,
- Figur 5:: schematische Darstellungen von vernähten Fügestellen,
- Figur 6:: schematische Darstellung der Herstellung einer erfindungsgemäßen Fügestelle durch Vernähen,
- Figur 7:: Reifenquerschnitte zur Darstellung unterschiedlicher Vulkanisierungsbereiche zur Anvulkanisation.

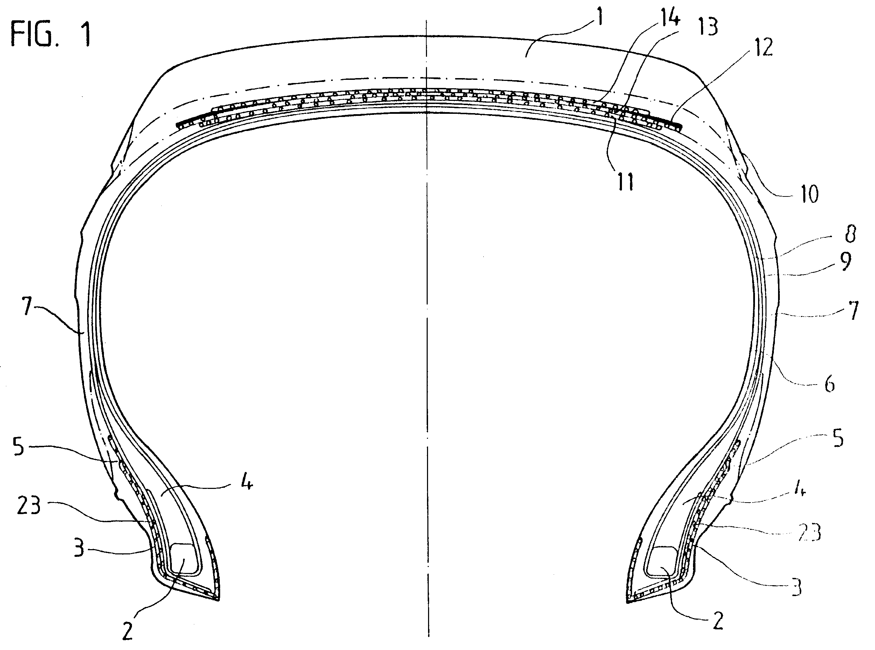

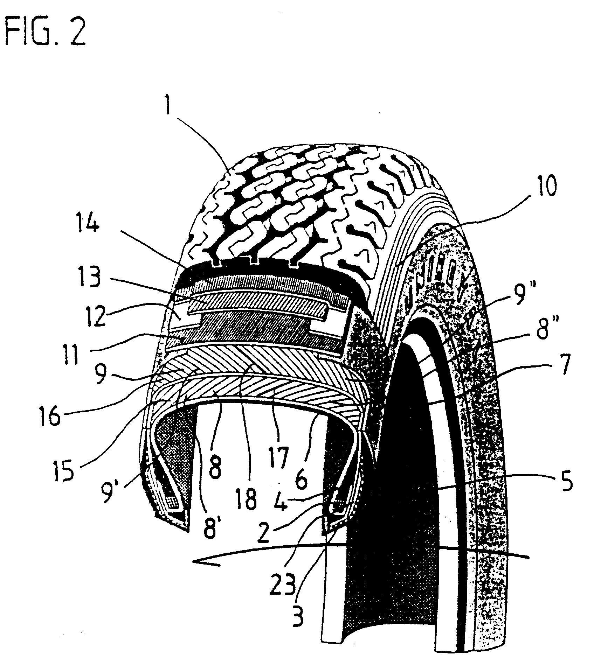

In den Figuren 1 und 2 ist der Aufbau eines Fahrzeugluftreifens beispielhaft dargestellt, bei dem um einen Kern 2 mit Kernprofil 4 eine erste Karkassenlage 8 außerhalb einer dichten Innenschicht 6 über den rechten Schulterbereich und die Zenitebene zu dem linken Schulterbereich und dem linken Kern 2 mit Kernprofil 4 reicht, um den er in herkömmlicher Weise gelegt ist. Über der ersten Karkassenlage 8 ist in herkömmlicher Weise eine zweite Karkassenlage 9 gelegt, die sich ebenfalls von der in Figur 1 rechts dargestellten Seite des Reifens bis zur links dargestellten Seite erstreckt. Beide Karkassenlagen sind in herkömmlicher Weise aus einer Karkassenlagenkautschukmischung und mit darin eingebetteten, jeweils zueinander parallel liegenden textilen Fäden 8 bzw. 9 bekannter Bauart aufgebauten Kautschukbändern hergestellt. In bekannter Weise werden diese Kautschukbänder an einem Schneidetisch schräg geschnitten und dann mit ihren parallelen nicht geschnittenen Seiten aneinandergefügt.

Zu jeder Karkassenlage sind in Figur 2 jeweils zwei derartige Karkassenstücke 8', 8'' bzw. 9', 9'' dargestellt. Das Karkassenlagenstück 8' ist an der Fügestelle 17 auf Stoß ohne Überlappung einzelner textiler Fäden an das Karkassenlagenstück 8'' gefügt und dauerhaft mit diesem verbunden. Ebenso ist das Karkassenstück 9' an der Fügestelle 18 an das Karkassenstück 9'' gefügt und dauerhaft mit diesem verbunden.

In herkömmlicher Weise ist im Ausführungsbeispiel von Figur 2 im Kernbereich über einen Wulststreifen 23 und den Wulstverstärker 3 ein Hornprofil 5 und von diesem ausgehend bis in den Schulterbereich reichend ein Seitenstreifen 7 aufgelegt. Über den Umfang des Reifens reichen außerhalb der Karkassenlagen liegend mehrere Stahlgürtellagen 11, 13 und eine Nylonbandage 14 mit dazwischenbefindlichen Gürtelkantenschutzen 12 bekannter Art. Im Schulterbereich sind zusätzlich Schulterstreifen 10 aufgelegt. Den Abschluß des Reifenaufbaus bildet in bekannter Weise ein Laufstreifen 1.

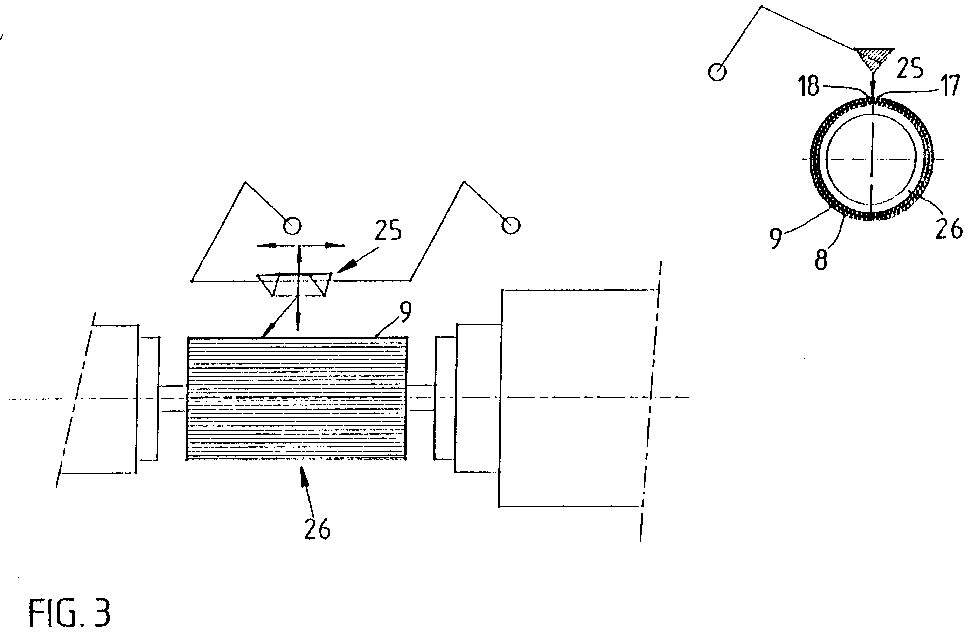

Wie in Figur 3 dargestellt ist, wird die aus mehreren geschnittenen Karkassenstücken hergestellte Karkassenlage an der Wickeltrommel 26 der schematisch dargestellten Wickelmaschine bekannter Bauart im Umfang auf die darunter befindliche Schicht aufgelegt und mit ihren einander zugewandten Enden auf Stoß aneinandergefügt und dauerhaft miteinander verbunden. Dabei überlappen sich die beiden Enden nicht. Die dauerhafte Verbindung wird gemäß Darstellung von Figur 3 mit Hilfe einer schematisch dargestellten Anvulkanisierpistole 25 bekannter Bauart erzeugt. Diese wird an einer Stelle der Fügestelle entsprechend der Pfeildarstellung so nah an die Fügestelle herangeführt, daß bei Einschalten der Anvulkanisierpistole 25 der Elektronenstrahl die Vorvernetzung im gewünschten Bereich der Fügenaht erzeugt. Entsprechend dem gewünschten Vulkanisierprozeß wird die Anvulkanisierpistole 25 entlang der Fügestelle verfahren, bis eine voll zufriedenstellende dauerhafte Verbindung zwischen den beiden zu verbindenden Karkassenendstücken erfolgt ist. Im Anschluß daran wird die Vulkanisierpistole 25 wieder entfernt.

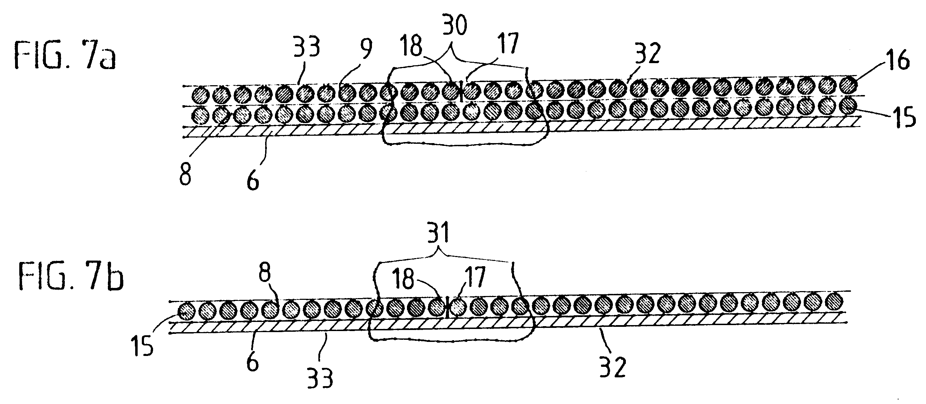

Es ist denkbar, den Anvulkanisationsprozeß so abzustimmen, daß die zusammenvulkanisierten Lagenenden im Bereich der Fügestelle 17, 18 einer Lage 9 gleichzeitig mit der oder mehreren unter ihr befindlichen Schichten zusammenvulkanisiert werden. Wie in den Beispielen der Figur 7 dargestellt ist, ergibt sich hierdurch im Nachbarbereich der Fügestelle bereits ein elastischer, belastbarer Bereich 30, 31. Ansonsten sind die Lagen in ihrem wesentlichen Bereich 32, 33 plastisch. Bei Zusammenvulkanisation mit der Innenschicht 6 im Bereich der Fügestelle kann nicht nur die Bildung von Erhebungen und hierdurch bedingte Nachteile während des späteren Erhebungsprozesses vermieden werden, sondern zusätzlich auch die Gefahr der Penetration der Innenschicht in den Nahtbereich beim späteren Erhebungs- und Vulkanisationsprozeß ausgeschlossen werden.

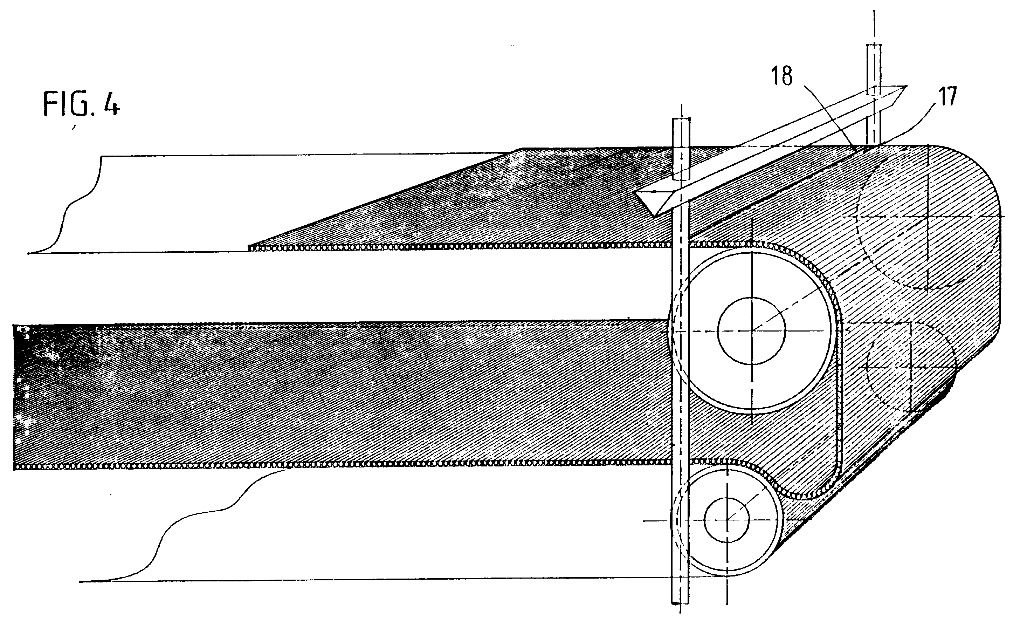

In Figur 4 ist die Anvulkanisation mit Hilfe einer bereits in Figur 3, jedoch in Figur 4 nicht, schematisch dargestellten Vulkanisierpistole 25 zur dauerhaften Endlagenverbindung zweier geschnittener Karkassenstücke am Schneidetisch dargestellt. Die geschnittenen Karkassenstücke werden mit ihren nicht geschnittenen Seitenlagen 17, 18 in bekannter Weise aneinander gereiht und ohne Überlappung einzelner textiler Fäden auf Stoß aneinandergefügt. Auch hier wird nun die Anvulkanisierpistole 25 entsprechend der gewünschten Vulkanisation in die Nähe der gewünschten Fügestelle verfahren. Nach Einschalten der Anvulkanisierpistole 25 wird sie in der der gewünschten Vulkanisation entsprechenden Geschwindigkeit entlang der Fügestelle verfahren. Sobald der gewünschte Verbindungszustand erreicht ist, wird die Anvulkanisationspistole 25 von der Fügestelle entfernt.

Ebenso ist es denkbar, anstelle der oben beschriebenen Anvulkanisationspistole, die nach Heranführen an die Fügestelle entlang der Fügestelle bewegt wird, eine über die gesamte Strecke der Fügebreite reichende, in Figur 4 schematisch dargestellte Anvulkanisiereinrichtung 27, beispielsweise einer sich über die gesamte Breite erstreckenden Vorrichtung oder mehrerer nebeneinander angeordneter Anvulkanisierpistolen 25, vorzusehen, die nach Aneinanderfügen der Endlagen über Teile oder über den gesamten Fügestellenbereich reichend in Nähe der Fügestelle gebracht wird. Nach erfolgtem gewünschten Anvulkanisationsprozeß, bei dem die Endlagen der zu verbindenden Karkassenstücke zusammenvulkanisieren und somit eine innige Verbindung eingehen wird die Anvulkanisiereinrichtung von der Nahtstelle entfernt.

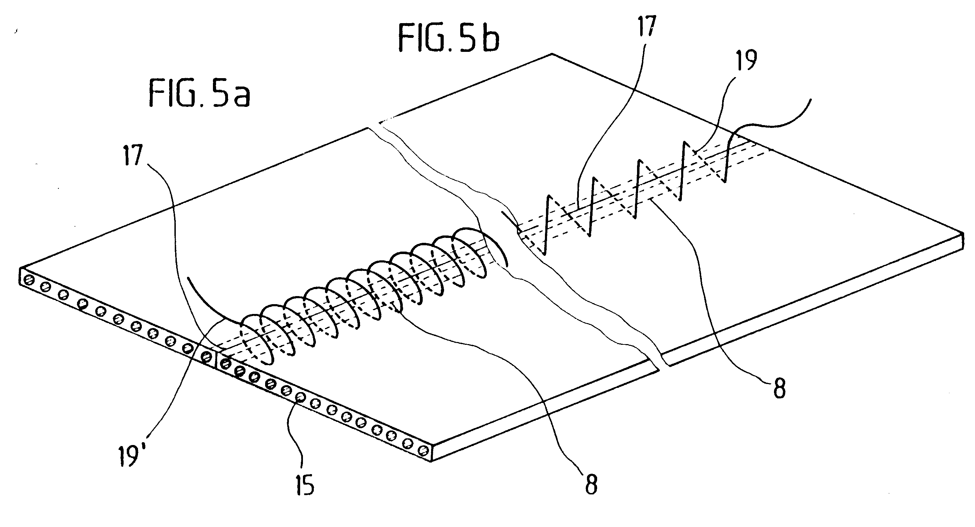

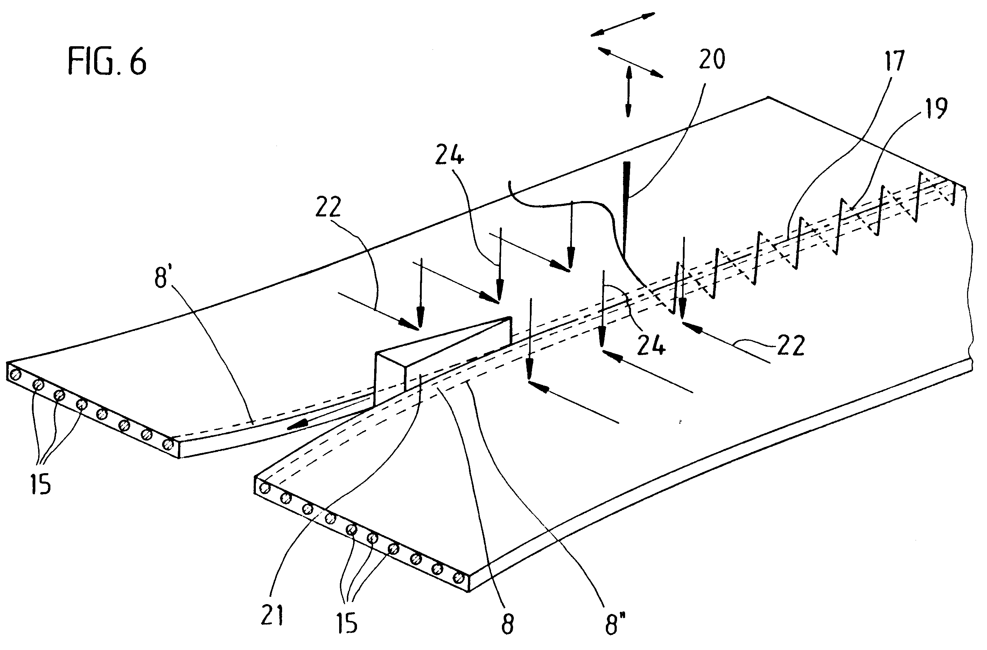

Anstelle der in den Figuren 3 und 4 dargestellten Erzeugung einer dauerhaften Verbindung zwischen den Endlagen einer Karkassenlage durch Zusammenvulkanisation ist es ebenfalls denkbar, die Endlagen, wie in den Figuren 6 und 5 dargestellt ist, miteinander zu vernähen.

Wie in Figur 6 schematisch dargestellt ist, werden die Endlagen 8' und 8'' entsprechend den Pfeilrichtungen der Pfeile 22, beispielsweise mit Hilfe von Führungsrollen zueinander auf Stoß aneinander geschoben. Eine Überlappung findet dabei nicht statt. Die nicht dargestellten Führungsrollen halten dazu die Karkassenenden entsprechend der Pfeildarstellung der Pfeile 24 nach unten. Mit Hilfe einer schematisch dargestellten Nähnadel 20 bekannter Bauart werden die beiden Lagenenden mit Hilfe eines textilen Fadens miteinander vernäht. Die Naht ist dabei, wie in Figur 6 dargestellt ist, vorteilhafterweise, um jeweils den der Fügestelle nächstliegenden der Fäden 15 der Karkassenlagenenden herumgeführt. Es ist aber auch denkbar, daß sie mehrere Fäden umfaßt.

Es ist denkbar, die Karkassenlagenenden gegen einen Keil 21 mit Hilfe der Führungsrollen 24 zu schieben und den Keil in die von seiner Keilspitze wegweisende Richtung entsprechend der Pfeildarstellung zu bewegen. In Bewegungsrichtung hinter der Keilspitze werden somit die Lagenenden mit Hilfe der Führungsrollen 24 aufeinander zubewegt und auf Stoß aneinandergefügt. Dem Keil 21 in seiner Bewegung folgend werden sowohl die Führungsrollen 22 als auch die Nadel 20 bewegt. Somit ist es denkbar, die Nähte auch automatisiert zu vernähen. Die Nadel 20 kann ebenso von Hand betätigt werden. Ebenso ist es denkbar, eine Nähmaschine zu verwenden. Wie in Figur 5 dargestellt ist, ist anstelle der Naht 19 auch eine Form 19' der Naht denkbar. Ebenso können auch andere bekannte Nahtformen gewählt werden.

Ebenso ist auch denkbar, daß anstelle einer durchgehend an einem Stück genähten Naht die Naht aus mehreren, in Nahtrichtung hintereinanderliegenden einzelnen jeweils ein Fadenstück aufweisenden Nahtstellen besteht. Diese können sogar jeweils nur aus einem Nahtstich, d.h. einem Fadenstück, das mit seinem einen Ende durch das Karkassenlagenende und mit dem anderen Ende durch das andere Karkassenlagenende gestochen ist, bestehen. Die beiden Fadenenden können dann ihrerseits miteinander verknotet oder vernäht werden. Jeder Einzelfaden bildet dann eine die Karkassenlagenenden zusammenhaltende Schlaufe. Durch mehrere solcher in Nahtrichtung möglichst äquidistant verteilter Schlaufen wird ebenfalls eine sicher haltende Verbindung der Karkassenlagenenden erreicht. Es ist dabei auch denkbar, die Enden der Einzelfäden nach durchstecken der Karkassenlagenenden einfach seitlich umzulegen und an die Gummierung anzudrücken. Durch die spätere Auflage der Karkassenlagenenden auf die darunter befindiche Innenschicht und ein Anrollen von außen können die Einzelfäden einer solchen, mit besonders geringem Aufwand herzustellenden Naht ebenfalls genügend Haltekraft aufbringen, um die Karkassenenden sicher zusammenzuhalten.

Es ist denkbar, nicht sowohl den Keil 21 als auch die Führungsrollen 24 und die Nadel 20 entlang der Fügenaht zu verschieben, sondern die Karkassenlagen entsprechend ihrer Fügestellenausrichtung in die durch die Keilspitze des Keils 21 weisende Richtung vom Keil 21 weg zu verschieben. Während des Verschiebeprozesses wird die Nadel 20 entsprechend des gewünschten Nahtmusters auf und ab und quer zur Naht bewegt und somit die Lagenenden mit Hilfe des Fadens 19 vernäht.

Die Karkasse kann, wie in Figur 2 dargestellt ist, diagonal, das heißt mit schräg zur Reifenzenitebene verlaufenden Fäden, aber auch in herkömmlicher radialer Bauart ausgeführt sein.

Die textilen Fäden 9, 8 können Einzelfilamente oder auch Mehrfilamentfäden sein.

### Bezugszeichenliste

- 1: Laufstreifen
- 2: Kern
- 3: Wulstverstärker
- 4: Kern-Profil
- 5: Horn-Profil
- 6: Innenschicht
- 7: Seitenstreifen
- 8: Karkassenlage
- 9: Karkassenlage
- 10: Schulterstreifen
- 11: Gürtellage
- 12: Gürtelkantenschutz
- 13: Gürtellage
- 14: Gürtellage
- 15: Textilfaden
- 16: Textilfaden
- 17: Fügestelle
- 18: Fügestelle
- 19: Faden
- 20: Nadel
- 21: Keil
- 22: Fügerichtung
- 23: Wulststreifen
- 24: Niederhalterichtung
- 25: Anvulkanisierpistole
- 26: Wickeltrommel
- 27: Anvulkanisiereinrichtung
- 30: elastischer Bereich
- 31: elastischer Bereich
- 32: plastischer Bereich
- 33: plastischer Bereich

## Patentansprüche

1. Karkasse eines Fahrzeugluftreifens, mit einer oder mehreren übereinander angeordneten Karkassenlagen (8, 9) von jeweils in Kautschuk eingebetteten Festigkeitsträgern (15, 16),
- wobei eine Lage aus einem Karkassenlagenstück oder aus mehreren nebeneinander angeordneten Karkassenlagenstücken (8', 8'', 9', 9'') mit parallelen textilen Festigkeitsträgern (15, 16) ausgebildet ist, wobei wenigstens zwei in Umfangsrichtung der Karkasse gerichtete Enden von Karkassenlagenstücken wenigstens in einem Verbindungsbereich überlappungsfrei auf Stoß Zusammengehalten sind.

2. Karkasse eines Fahrzeugluftreifens gemäß den Merkmalen von Anspruch 1,
- mit Mitteln zur Aufrechterhaltung eines dauerhaften Berührkontakts zwischen den beiden miteinander verbundenen Endbereichen (8', 8'', 9', 9'').

3. Karkasse eines Fahrzeugluftreifens gemäß den Merkmalen von Anspruch 2,
- bei der die Mittel zur Aufrechterhaltung eines dauerhaften Berührkontakts die Endbereiche zusammenhaltende Nahtbereiche (19, 19') sind.

4. Karkasse eines Fahrzeugluftreifens gemäß den Merkmalen des Anspruchs 1 oder 2,
- mit innig miteinander verbundenen Endbereichen.

5. Karkasse eines Fahrzeugluftreifens gemäß den Merkmalen von Anspruch 4,
- mit durch Anvulkanisation zusammenvulkanisierten Endbereichen.

6. Karkasse eines Fahrzeugluftreifens gemäß den Merkmalen von Anspruch 5,
- mit ein- oder mehrlagiger Karkasse mit textilen Festigkeitsträgern (15, 16),
- von denen durch Anvulkanisation zumindest eine Lage in Endbereichen zusammen- und die Endbereiche zumindest mit einer weiteren benachbarten Lage zusammenvulkanisiert sind.

7. Karkasse eines Fahrzeugluftreifens gemäß den Merkmalen von Anspruch 6,
- bei der die benachbarte Lage die untere Lage ist.

8. Karkasse eines Fahrzeugluftreifens gemäß den Merkmalen von Anspruch 6,
- bei der die benachbarte Lage die Innenschicht ist.

9. Verfahren zur Herstellung einer Karkassenlage eines Fahrzeugluftreifens aus einem Karkassenlagenstück oder aus mehreren Karkassenlagenstücken mit in Kautschuk eingebetteten parallelen textilen Festigkeitsträgern (15, 16), bei dem Enden von im Fahrzeugluftreifen in Umfangsrichtung nebeneinander angeordneten Karkassenlagenstücken (8', 8'', 9', 9'') auf Stoß in Berührkontakt aneinandergefügt und im Anschluß daran zusammenhaltend miteinander verbunden werden.

10. Verfahren zur Herstellung einer Karkassenlage eines Fahrzeugluftreifens gemäß den Merkmalen von Anspruch 9,
- bei der Lagenendbereiche (8', 8'', 9', 9'') nach Aneinanderfügen miteinander vernäht werden.

11. Verfahren zur Herstellung einer Karkassenlage eines Fahrzeugluftreifens gemäß den Merkmalen von Anspruch 9,
- bei der Lagenendbereiche (8', 8'', 9', 9'') nach Aneinanderfügen miteinander innig verbunden werden.

12. Verfahren zur Herstellung einer Karkassenlage eines Fahrzeugluftreifens gemäß den Merkmalen von Anspruch 11,
- bei der Lagenendbereiche (8', 8'', 9', 9'') nach Aneinanderfügen durch Anvulkanisation zusammenvulkanisiert werden.

13. Verfahren zur Herstellung einer Karkassenlage eines Fahrzeugluftreifens gemäß einem oder mehreren der Ansprüche 9 bis 11,
- bei der Lagenendbereiche (8', 8'', 9', 9'') vor Auflegen der Lage auf die Wickeltrommel zum Aufbau des Reifens dauerhaft miteinander verbunden werden.

14. Verfahren zur Herstellung einer Karkassenlage eines Fahrzeugluftreifens gemäß den Merkmalen von einem oder mehreren der Ansprüche 9 bis 11,
- bei der Lagenendbereiche (8', 8'', 9', 9'') nach Auflegen auf die Wickeltrommel zum Aufbau des Reifens miteinander verbunden werden.

15. Verfahren zur Herstellung einer Karkassenlage eines Fahrzeugluftreifens gemäß den Merkmalen von Anspruch 11,
- bei der nach Zusammenfügen der Lagenendbereiche (8', 8'', 9', 9'') zumindest eine Vulkanisiervorrichtung in einen zum Anvulkanisieren erforderlichen Abstand zum Verbindungsbereich bewegt wird und dann während des Anvulkanisierens entlang des Verbindungsbereichs bewegt wird.

16. Verfahren zur Herstellung einer Karkassenlage eines Fahrzeugluftreifens gemäß den Merkmalen von Anspruch 11,
- bei der nach Zusammenfügen der Lagenendbereiche (8' 8'', 9', 9'') und vor dar Vulkanisation eine Vulkanisiervorrichtung, die sich über den gesamten Verbindungsbereich der beiden Lagenendbereiche erstreckt, in einen zum Anvulkanisieren erforderlichen Abstand zum Verbindungsbereich bewegt wird.

## Claims

1. Carcase of a pneumatic vehicle tyre, comprising one or more carcase plies (8, 9), which are disposed one above the other, of reinforcing members (15, 16) which are each embedded in rubber,
- wherein one ply is formed from a carcase ply piece or from a plurality of adjacently disposed carcase ply pieces (8', 8'', 9', 9'') provided with parallel textile reinforcing members (15, 16), at least two ends of carcase ply pieces, orientated in the circumferential direction of the carcase, are held together in abutment with each other in an overlap-free manner in a connection region.

2. Carcase of a pneumatic vehicle tyre according to the features of claim 1,
- comprising means for maintaining a permanent contiguous contact between the two interconnected end regions (8', 8'', 9', 9'').

3. Carcase of a pneumatic vehicle tyre according to the features of claim 2,
- wherein the means for maintaining a permanent contiguous contact are seam regions (19, 19'), which hold together the end regions.

4. Carcase of a pneumatic vehicle tyre according to the features of claim 1 or 2,
- comprising end regions which are intimately interconnected.

5. Carcase of a pneumatic vehicle tyre according to the features of claim 4,
- comprising end regions which are vulcanised together by prevulcanisation.

6. Carcase of a pneumatic vehicle tyre according to the features of claim 5,
- comprising a single-ply or multiple-ply carcase with textile reinforcing members (15, 16),
- of which at least one ply is vulcanised together in end regions by prevulcanisation, and the end regions are vulcanised together, at least with one additional adjacent ply.

7. Carcase of a pneumatic vehicle tyre according to the features of claim 6,
- wherein the adjacent ply is the lower ply.

8. Carcase of a pneumatic vehicle tyre according to the features of claim 6,
- wherein the adjacent ply is the internal layer.

9. Method of producing a carcase ply of a pneumatic vehicle tyre from a carcase ply piece or from a plurality of carcase ply pieces provided with parallel textile reinforcing members (15, 16) embedded in rubber, wherein ends of carcase ply pieces (8', 8'', 9', 9''), which are disposed in the pneumatic vehicle tyre adjacent one another when viewed with respect to the circumferential direction, are joined together so as to abut each other with a contiguous contact and are subsequently interconnected by being held together.

10. Method of producing a carcase ply of a pneumatic vehicle tyre according to the features of claim 9,
- wherein ply end regions (8', 8'', 9', 9'') are sewn together after being joined to one another.

11. Method of producing a carcase ply of a pneumatic vehicle tyre according to the features of claim 9,
- wherein ply end regions (8', 8'', 9', 9'') are intimately interconnected after being joined to one another.

12. Method of producing a carcase ply of a pneumatic vehicle tyre according to the features of claim 11,
- wherein ply end regions (8', 8'', 9', 9'') are vulcanised together by prevulcanisation after being joined to one another.

13. Method of producing a carcase ply of a pneumatic vehicle tyre according to one or more of claims 9 to 11,
- wherein ply end regions (8', 8'', 9', 9'') are permanently interconnected prior to the ply being placed upon the winding drum for the construction of the tyre.

14. Method of producing a carcase ply of a pneumatic vehicle tyre according to the features of one or more of claims 9 to 11,
- wherein ply end regions (8', 8'', 9', 9'') are interconnected after being placed upon the winding drum for the construction of the tyre.

15. Method of producing a carcase ply of a pneumatic vehicle tyre according to the features of claim 11,
- wherein, after the ply end regions (8', 8'', 9', 9'') have been joined together, at least one vulcanising apparatus is moved into a spacing from the connection region, such spacing being required for prevulcanisation, and said apparatus is then moved along the connection region during the prevulcanisation.

16. Method of producing a carcase ply of a pneumatic vehicle tyre according to the features of claim 11,
- wherein, after the ply end regions (8', 8'', 9', 9'') have been joined together and prior to the vulcanisation, a vulcanising apparatus, which extends over the entire connection region of the two ply end regions, is moved into a spacing from the connection region, such spacing being required for prevulcanisation.

## Revendications

1. Carcasse d'un pneumatique de véhicule, comprenant une couche de carcasse ou plusieurs couches de carcasse superposées (8, 9), constituées de supports de résistance (15, 16) noyés dans du caoutchouc,
- une couche étant constituée d'une pièce de couche de carcasse ou de plusieurs pièces de couche de carcasse superposées (8', 8'', 9', 9'') comprenant des supports de résistance textiles (15, 16) parallèles, au moins deux extrémités de pièces de couche de carcasse, extrémités orientées dans la direction périphérique de la carcasse, étant maintenues ensemble de manière jointive, sans chevauchement, dans une zone d'assemblage.

2. Carcasse d'un pneumatique de véhicule selon les caractéristiques de la revendication 1,
- comportant des moyens destinés à conserver un contact permanent entre les deux zones d'extrémité (8', 8'', 9', 9'') assemblées l'une à l'autre.

3. Carcasse d'un pneumatique de véhicule selon les caractéristiques de la revendication 2,
- dans laquelle les moyens destinés à conserver un contact permanent sont des zones de couture (19, 19') qui maintiennent ensemble les zones d'extrémité.

4. Carcasse d'un pneumatique de véhicule selon les caractéristiques de la revendication 1 ou 2,
- comprenant des zones d'extrémité intimement assemblées.

5. Carcasse d'un pneumatique de véhicule selon les caractéristiques de la revendication 4,
- comprenant des zones d'extrémité assemblées par vulcanisation.

6. Carcasse d'un pneumatique de véhicule selon les caractéristiques de la revendication 5,
- comprenant une carcasse à une ou plusieurs couches avec des supports de résistance textiles (15, 16),
- dont au moins une couche est assemblée par vulcanisation dans des zones d'extrémité et les zones d'extrémité sont assemblées par vulcanisation à au moins une autre couche voisine.

7. Carcasse d'un pneumatique de véhicule selon les caractéristiques de la revendication 6,
- dans laquelle la couche voisine est la couche inférieure.

8. Carcasse d'un pneumatique de véhicule selon les caractéristiques de la revendication 6,
- dans laquelle la couche voisine est la couche intérieure.

9. Procédé de fabrication d'une couche de carcasse d'un pneumatique de véhicule en une pièce de couche de carcasse ou plusieurs pièces de couche de carcasse comportant des supports de résistance textiles (15, 16) parallèles, noyés dans du caoutchouc,
- selon lequel des extrémités de pièces de couche de carcasse (8', 8'', 9', 9'') disposées côte à côte dans la direction périphérique, dans le pneumatique de véhicule, sont rapprochées bout à bout, en contact les unes avec les autres, de manière jointive, et sont ensuite assemblées les unes aux autres pour être maintenues ensemble.

10. Procédé de fabrication d'une couche de carcasse d'un pneumatique de véhicule selon les caractéristiques de la revendication 9,
- selon lequel des zones d'extrémité de couche (8', 8'', 9', 9''), après rapprochement jointif, sont assemblées par couture les unes aux autres.

11. Procédé de fabrication d'une couche de carcasse d'un pneumatique de véhicule selon les caractéristiques de la revendication 9,
- selon lequel des zones d'extrémité de couche (8', 8'', 9', 9''), après rapprochement jointif, sont intimement assemblées les unes aux autres.

12. Procédé de fabrication d'une couche de carcasse d'un pneumatique de véhicule selon les caractéristiques de la revendication 11,
- selon lequel des zones d'extrémité de couche (8', 8'', 9', 9''), après rapprochement jointif, sont assemblées les unes aux autres par vulcanisation.

13. Procédé de fabrication d'une couche de carcasse d'un pneumatique de véhicule selon les caractéristiques de l'une ou plusieurs des revendications 9 à 11,
- selon lequel des zones d'extrémité de couche (8', 8'', 9', 9''), avant application de la couche sur le tambour d'enroulement pour l'élaboration du pneumatique, sont assemblées les unes aux autres de façon permanente.

14. Procédé de fabrication d'une couche de carcasse d'un pneumatique de véhicule selon les caractéristiques de l'une ou plusieurs des revendications 9 à 11,
- selon lequel des zones d'extrémité de couche (8', 8'', 9', 9'') sont assemblées les unes aux autres après application de la couche sur le tambour d'enroulement pour l'élaboration du pneumatique.

15. Procédé de fabrication d'une couche de carcasse d'un pneumatique de véhicule selon les caractéristiques de la revendication 11,
- selon lequel, après rapprochement jointif des zones d'extrémité de couche (8', 8'', 9', 9''), on déplace au moins un dispositif de vulcanisation à une distance de la zone d'assemblage, nécessaire à la vulcanisation, ce dispositif de vulcanisation étant ensuite déplacé, durant la vulcanisation, le long de la zone d'assemblage.

16. Procédé de fabrication d'une couche de carcasse d'un pneumatique de véhicule selon les caractéristiques de la revendication 11,
- selon lequel après rapprochement jointif des zones d'extrémité de couche (8', 8'', 9', 9'') et avant la vulcanisation, on déplace un dispositif de vulcanisation, qui s'étend sur la totalité de la zone d'assemblage des deux zones d'extrémité de couche, à une distance de la zone d'assemblage, nécessaire à la vulcanisation.
